# EUROPÄISCHE PATENTSCHRIFT

(11) **EP 3 077 424 B1**
(45) Veröffentlichungstag und Bekanntmachung des Hinweises auf die Patenterteilung: **20.09.2017**
(21) Anmeldenummer: 14811816.9
(22) Anmeldetag: 04.12.2014
(51) Int. Cl.: C08F 8/12

(54) **VERFAHREN ZUR HERSTELLUNG VON POLYVINYLALKOHOL**
METHOD FOR PRODUCING POLYVINYL ALCOHOL
PROCÉDÉ DE PRODUCTION D'ALCOOL POLYVINYLIQUE

(30) Priorität: 06.12.2013 DE 102013225178
(43) Veröffentlichungstag der Anmeldung: 12.10.2016
(73) Patentinhaber: Wacker Chemie AG, 81737 München (DE)
(72) Erfinder: KÖHLER, Thomas, Allentown, Pennsylvania 18104 (US); WINDT, Oliver, A-5122 Hochburg-Ach (AT); BELITZER, Martina, 84518 Garching (DE)
(74) Vertreter: Ege, Markus
(86) Internationale Anmeldenummer: PCT/EP2014/076632
(87) Internationale Veröffentlichungsnummer: WO 2015/082641

(56) Entgegenhaltungen:
- EP-A1- 0 044 027
- EP-A2- 0 054 716
- KR-A- 20070 058 083

## Beschreibung

Die Erfindung betrifft Verfahren zur Herstellung von Polyvinylalkohol mittels katalytischer Umsetzung von alkoholischen Polyvinylesterlösungen in Extrudern.

Die Herstellung von Polyvinylalkohol (PVAL) erfolgt im Allgemeinen durch Umesterung von Polyvinylestern mit Alkoholen, wie Methanol oder Ethanol. Die Polyvinylester sind durch radikalische Polymerisation von Vinylestern, das heißt von Estern aliphatischer Carbonsäuren, wie Vinylacetat oder Vinylpropionat, zugänglich. Die Umesterung kann basisch oder sauer katalysiert erfolgen. Die erhaltenen Polyvinylalkohole werden üblicherweise durch ihren Hydrolysegrad und ihre Viskosität in einer 4 Gew.-%-igen wässrigen Lösung charakterisiert.

An Stelle des Hydrolysegrades findet man häufig auch die Angabe der sogenannten Verseifungszahl, welche die Menge an Kaliumhydroxid (KOH) in Milligramm pro Gramm PVAL wiedergibt, die für eine vollständige Spaltung aller übrigen Estergruppen nötig ist. Die Verseifungszahl ist somit ein Maß für die Anzahl der in sämtlichen Polymermolekülen einer Probe vorhandenen Estergruppen. Es können bei gleichen gefundenen makroskopischen Verseifungszahlen deutlich unterschiedliche Verteilungen der Verseifungszahlen über die Anzahl der Polymermoleküle auftreten. Die einzelnen Polymermoleküle können annähernd die gleichen Hydrolysegrade aufweisen (enge Verseifungszahlverteilung) oder können durch sehr unterschiedliche Hydrolysegrade charakterisiert sein (breite Verseifungszahlverteilung).

Abhängig vom Herstellungsverfahren gibt es bei gleicher Verseifungszahl und Viskosität dennoch deutliche Unterschiede im Aufbau der Polyvinylalkohole. Zum einen können die verbliebenen Estergruppierungen auf verschiedene Weise angeordnet sein, entweder in größeren Blöcken zusammengefasst oder statistisch verteilt. Beim Einsatz von basischen Katalysatoren werden eher blockige Polyvinylalkohole, beim Einsatz von sauren Katalysatoren eher Polyvinylalkohole mit statistischer Verteilung der verbliebenen Estergruppen erhalten. Auch Zusätze von anderen Lösemitteln, beispielsweise Wasser, haben einen Einfluss auf die Verteilung der Estergruppen im Polyvinylalkohol. Seit langem sind diskontinuierliche Verfahren zur Umesterung in Knetern bekannt, welche beispielsweise in der DE 3000750, DE 0763840, DE 10242416 oder der EP 1231221 beschrieben sind. Hierbei werden hochkonzentrierte, im Allgemeinen methanolische Polyvinylacetat-Lösungen mit dem Umesterungskatalysator gemischt. Das entstehende Gel wird während der Reaktion fortwährend zerkleinert. Nach Abbruch der Reaktion wird im Kneter Methanol und gebildetes Methylacetat abdestilliert. Nach solchen Verfahren sind große Mengen an Polyvinylalkohol nur schwer kostengünstig zu produzieren. Typischerweise werden durch Kneter-Verfahren Polyvinylalkohole mit sehr breiten Verseifungszahlverteilungen und hoher Blockigkeit erhalten.

Als diskontinuierliches Verfahren sei die Umesterung von Polyvinylacetat zu Polyvinylalkohol in einem normalen Rührkessel genannt, wie beispielsweise in der DE 2304684 oder der GB 862488 beschrieben. Hierbei werden verdünnte, im Allgemeinen methanolische Polyvinylacetatlösungen mit Katalysator vermischt. Durch fortwährendes Rühren wird das Gel zerkleinert und eine sehr feinteilige Suspension von Polyvinylalkohol in Methanol/Methylacetat gebildet. Solch feinteilige Suspensionen sind allerdings schlecht filtrierbar, so dass die Herstellung von festem Polyvinylalkohol auf dies Weise nicht wirtschaftlich ist. Darüber hinaus müssen große Mengen Lösungsmittel aus dem Rührkessel abdestilliert und einer destillativen Aufarbeitung zugeführt werden. Diese mehrmalige Destillation stellt einen zeit- und energieintensiven Prozess dar. Zur Trennung von Methylacetat und Methanol sind außerdem mehrere Destillationskolonnen erforderlich.

Ein weiteres etabliertes Verfahren zur Herstellung von Polyvinylalkohol ist das sogenannte Band-Verfahren, welches beispielsweise aus der US3278505, US2643994, US2642419 oder der DE-A 2251603 bekannt ist. Hierbei wird Lauge mit der im Allgemeinen methanolischen Polyvinylacetat-Lösung schnell und intensiv gemischt und auf ein fortlaufendes Band aufgetragen. Die Mischung erstarrt zu einem Gel, welches am Ende des Bandes gebrochen und geschnitten wird. Das so erzeugte Granulat wird im Allgemeinen mit Essigsäure neutralisiert und mit Methanol gewaschen. Nachteiliger Weise führt auch dieses Verfahren zu Polyvinylalkohol mit inhomogenen Verseifungsgraden und breiten Verseifungszahlverteilungen. Darüber hinaus ist das Verfahren nur bei der Produktion von großen Mengen an Polyvinylalkohol wirtschaftlich und somit weniger geeignet bei der Einführung innovativer, neuer und am Anfang der Produktion mengenmäßig kleiner Produkte.

Ein weiteres kontinuierliches Verfahren ist die Suspensionsumesterung von Polyvinylacetat, wie beispielsweise in der US3487060 beschrieben. Hierbei wird die Polyvinylacetat- und die Katalysatorlösung kontinuierlich zu einem bewegtem Alkoholysegemisch gegeben und eine Aufschlämmung von Polyvinylalkohol in Methanol und Methylacetat kontinuierlich aus diesem Alkoholysegemisch entfernt. Durch geeignete Prozessführung lässt sich dabei die Gelbildung weitestgehend vermeiden. Im Vergleich zu den anderen kontinuierlichen Verfahren sind die Anschaffungskosten für das Reaktionsequipment hier sehr gering. Allerdings ist die Einhaltung eines bestimmten Hydrolysegrades schwierig. Die DE-A 1086893 beschreibt ein kontinuierliches Verfahren, bei dem die alkalische Alkohollösung des Polyvinylesters durch ein Rohr geleitet wird, wobei sich eine feste Masse bildet, welche mittels Walzen aus dem Rohr gezogen wird.

Des Weiteren sind auch eine Reihe von Extruderverfahren bekannt, in denen saure oder alkalische Alkohollösungen von Polyvinylestern durch Extruder geführt werden. Dabei wird das während der Hydrolyse entstehende Gel im Extruder zerkleinert, wie beispielsweise in der US3072624 oder der US 3547858 beschrieben. Die Zugabe eines Neutralisierungsmittels zum Verseifungsprodukt ist in diesen Schriften aber nicht erwähnt. Hierzu lehrt die EP0044027, die Hydrolyseprodukte aus dem Extruder auszutragen und anschließend nach Abkühlung auf Raumtemperatur durch Zugabe einer Säure zu neutralisieren. Analog empfiehlt die EP0054716, die Verseifungsprodukte aus dem Extruder in einen Tank zu überführen und darin durch Säurezugabe zu neutralisieren. Die EP1674485 setzt einen Extruder zur Verseifung von speziellen Pfropfcopolymeren ein, die Vinylestereinheiten sowie Polyether-Einheiten enthalten. Die Verseifungsprodukte der EP1674485 sind jedoch Thermoplasten mit einem ganz anderen Eigenschaftsprofil, insbesondere gänzlich anderen Fließeigenschaften als Polyvinylalkohole von Vinylesterpolymeren, die sich ausschließlich von ethylenisch ungesättigten Monomeren ableiten.

Vor diesem Hintergrund bestand die Aufgabe, ein effizienteres Verfahren zur Herstellung von Polyvinylalkoholen bereitzustellen; insbesondere sollte das Verfahren unter Einsatz von möglichst wenig Lösungsmittel durchgeführt werden können und auch für großtechnische Anwendungen geeignet sein. Zudem sollten die damit erhaltenen Polyvinylalkohole als Schutzkolloid für Emulsionspolymerisationsverfahren geeignet sein und nach Möglichkeit chargenunabhängig eine enge und einheitliche Verseifungszahlverteilung aufweisen. Auch sollte das Verfahren nach Möglichkeit einen einfachen Zugang zu Polyvinylalkoholen mit unterschiedlichsten Verseifungsgraden und Viskositäten eröffnen.

Überraschenderweise wurde diese Aufgabe gelöst, indem eine alkoholische Lösung eines Polyvinylesters in Gegenwart eines Katalysators, insbesondere eines Umesterungskatalysators, in einem Extruder umgesetzt wurde und zum Produkt der Umsetzung, im Allgemeinen dem Umesterungsprodukt, im Extruder Neutralisierungsmittel zugegeben wurde.

Gegenstand der Erfindung sind Verfahren zur Herstellung von Polyvinylalkoholen mittels katalytischer Umsetzung von alkoholischen Polyvinylesterlösungen in Extrudern, dadurch gekennzeichnet, dass die Polyvinylester ausschließlich auf ethylenisch ungesättigten Monomeren basieren und dem Produkt der katalytischen Umsetzung im Extruder ein oder mehrere Neutralisierungsmittel zugegeben werden.

Die alkoholische Polyvinylesterlösung kann beispielsweise ein oder mehrere Polyvinylester, ein oder mehrere alkoholische Lösungsmittel, gegebenenfalls ein oder mehrere Katalysatoren und gegebenenfalls ein oder mehrere Zusatzstoffe umfassen.

Geeignete alkoholische Lösungsmittel für die Polyvinylester sind beispielsweise einwertige, aliphatische Alkohole mit 1 bis 6 Kohlenstoff-Atomen oder deren Gemische, vorzugsweise Methanol oder Ethanol, besonders bevorzugt Methanol.

Beispiele für Zusatzstoffe sind Wasser, Aceton, Methylacetat, Pentan oder Benzol. Vorzugsweise werden aber keine Zusatzstoffe eingesetzt.

Geeignete Polyvinylester sind beispielsweise die Homo- oder Misch-Polymerisate mit Vinylestern von aliphatischen Carbonsäuren mit 1 bis 13 C-Atomen wie Vinylformiat, Vinylacetat, Vinylpropionat, Vinyllaurat sowie Vinylester von alpha-verzweigten Carbonsäuren mit 9 bis 13 C-Atomen, wie VeoVa 9 oder VeoVa 10 (Handelsnamen der Firma Momentive). Bevorzugte Vinylester sind Vinyllaurat, Vinylester von alpha-verzweigten Carbonsäuren mit 9 bis 13 C-Atomen und insbesondere Vinylacetat. Bevorzugt sind Homo- und Misch-Polymerisate von Vinylacetat. Gegebenenfalls können die Polymerisate bis zu 50 Gew.-% Comonomereinheiten enthalten, welche sich von weiteren, mit Vinylestern copolymerisierbaren, ethylenisch ungesättigten Comonomeren ableiten, wie beispielsweise Olefine wie Ethylen und Propylen, Acrylsäureester oder Methacrylsäureester von unverzweigten oder verzweigten Alkoholen mit 1 bis 22 C-Atomen, wie Methylacrylat, Methylmethacrylat, n-Butylacrylat, t-Butylacrylat oder 2-Ethylhexylacrylat, oder ethylenisch ungesättigten Comonomere wie Isopropenylacetat, N-Vinylpyrrolidon, N-Vinylcaprolactam, Vinylformamid sowie ethylenisch ungesättigte Mono- und Dicarbonsäuren, wie Acrylsäure, Methacrylsäure, Crotonsäure, Itaconsäure, Fumarsäure, Maleinsäure oder Maleinsäureanhydrid, ethylenisch ungesättigte Carbonsäureamide wie Acrylamid und N-Methylolacrylamid, Vinylester von alpha-verzweigten Carbonsäuren mit 9 bis 13 C-Atomen, wie VeoVa 9 oder VeoVa 10. Bevorzugte Comonomere sind Ethylen, Itaconsäure, Maleinsäure, und insbesondere Crotonsäure, Vinylester von alpha-verzweigten Carbonsäuren mit 9 bis 10 C-Atomen, wie VeoVa 9 oder VeoVa 10, sowie Isopropenylacetat. Am meisten bevorzugt wird Polyvinylacetat.

Die erfindungsgemäß eingesetzten Polyvinylester basieren ausschließlich auf ethylenisch ungesättigten Monomeren. Vorzugsweise enthalten die Polyvinylester keine Polyether-Einheit oder keine Polyether-Gruppe, wie Polyalkylenglykolgruppen, und besonders bevorzugt handelt es sich bei den Polyvinylestern um keine Propfcopolymere. Polyalkylenglykolgruppen sind beispielsweise -(CH₂)ₙ-O-Gruppen mit n = 1 bis 5 oder 1 bis 4, wobei ein oder mehrere Wasserstoffatome einer Polyalkylenglykolgruppe substituiert sein können, beispielsweise durch Alkylgruppen mit 1 bis 10 Kohlenstoffatomen, wie Methyl- oder Ethyl-Gruppen.

Die Polyvinylester können in Form von alkoholischen Lösungen in den Extruder eingebracht werden. Der Gehalt an Polyvinylester in solchen alkoholischen Lösungen wird dabei bevorzugt so gewählt, dass die Viskosität der eingesetzten Polyvinylesterlösung vor der Vermischung mit der Katalysatorlösung vorzugsweise ≤ 1.000.000 mPa·s, mehr bevorzugt ≤ 100.000 mPa·s, besonders bevorzugt ≤ 50.000 mPa·s und am meisten besonders bevorzugt ≤ 20.000 mPa·s beträgt (bestimmt mit einem Brookfieldviskosimeter, nach Temperierung auf 23°C, unter Verwendung der im jeweiligen Viskositätsbereich üblicherweise eingesetzten Spindel, bei 20 UPM).

Der Gehalt an Polyvinylester in der alkoholischen Lösung, in der die katalytische Umsetzung stattfindet, wird auf vorzugsweise 20 bis 80 Gew.-%, besonders bevorzugt 30 bis 70 Gew.-%, eingestellt. Dadurch kann die Bildung von Polyvinylalkohol mit ausgewogener Qualität und die Raum-Zeit-Leistung der Umesterungsreaktion positiv beeinflusst werden.

Die Umesterung der Polyvinylester, auch als Umsetzung der Polyvinylester zu Polyvinylalkoholen bezeichnet, erfolgt vorzugsweise in Gegenwart von einem oder mehreren sauren oder alkalischen Katalysatoren. Saure Katalysatoren sind beispielweise Mineralsäuren, wie Salzsäure oder Schwefelsäure, oder organische Säuren, wie aliphatische oder aromatische Sulphonsäuren. Bevorzugt sind alkalische Katalysatoren. Beispiele für alkalische Katalysatoren sind Hydroxide, Alkoholate, insbesondere Alkoholate mit 1 bis 6 C-Atomen, und Carbonate von Alkali- oder Erdalkalimetallen. Bevorzugte Alkoholate sind hierbei Methanolate und Ethanolate. Bevorzugt werden die Hydroxide oder Alkoholate von Lithium, Natrium, Kalium oder Calcium; besonders bevorzugt werden Natriumhydroxid und Natriummethanolat.

Die Katalysatoren werden im Allgemeinen in Form deren wässrigen oder vorzugsweise alkoholischen Lösungen eingesetzt und vorzugsweise im gleichen Alkohol gelöst, welcher zur Lösung des Polyvinylesters eingesetzt wird. Werden wässrige Lösungen des Katalysators eingesetzt, so werden diese bevorzugt mit Alkohol, besonders bevorzugt mit dem gleichen Alkohol, welcher zur Lösung des Polyvinylesters eingesetzt wird, verdünnt. Der Gehalt an Katalysator in der eingesetzten alkoholischen oder alkoholisch-wässrigen Lösung beträgt vorzugsweise 0,1 bis 20 Gew.-% und besonders bevorzugt 0,3 bis 15 Gew.-%. Die eingesetzten Mengen an Katalysator betragen im Allgemeinen 0,05 bis 10,0 Gew.-%, bevorzugt 0,1 bis 7 Gew.-%, besonders bevorzugt 0,2 bis 5 Gew.-% und am meisten bevorzugt 0,2 bis 3 Gew.-%, je bezogen auf das Trockengewicht der Polyvinylester.

Ein oder mehrere Polyvinylester und ein oder mehrere Katalysatoren können auch in Form einer Vormischung in den Extruder eingebracht werden. Für diesen Fall werden ein oder mehrere Polyvinylester und ein oder mehrere Katalysatoren vor Eintritt in den Extruder in einer vorgeschalteten Mischeinheit gemischt. Der Polyvinylester wird vorzugsweise in Form einer alkoholischen Lösung in die Mischeinheit eingebracht. Der Katalysator wird vorzugsweise in Form einer wässrigen Lösung und besonders bevorzugt in Form einer alkoholischen Lösung in die Mischeinheit eingebracht. Das Mischen kann beispielsweise bei Temperaturen von 10 bis 60°C, bevorzugt 20 bis 50°C und besonders bevorzugt 20 bis 35°C erfolgen. Nach Mischen der Polyvinylesterlösung und der Katalysatorlösung hat die so erhaltene Vormischung eine Viskosität von vorzugsweise ≤ 700.000 mPa·s, besonders bevorzugt ≤ 50.000 mPa·s, am meisten bevorzugt ≤ 30.000 mPa·s und/oder vorzugsweise 1.000 mPa·s und besonders bevorzugt ≥ 5.000 mPa·s (bestimmt mit einem Brookfieldviskosimeter, nach Temperierung auf 23°C, unter Verwendung der im jeweiligen Viskositätsbereich üblicherweise eingesetzten Spindel, bei 20 UPM).

Das Mischen zur Herstellung der Vormischung enthaltend Polyvinylester und Katalysator kann allgemein in diskontinuierlicher oder bevorzugt in kontinuierlicher Weise erfolgen. Bei der diskontinuierlichen Herstellung der Vormischung wird die Polyvinylesterlösung beispielsweise in der vorgeschalteten Mischeinheit, vorzugsweise in einem Reaktor, vorgelegt und mit einer wässrigen, mit einer mit Alkohol verdünnten wässrigen oder mit einer alkoholischen Lösung des Katalysators vermischt. Es wird vorzugsweise eine homogene Mischung erhalten. Die so erhaltene Vormischung wird dann anschließend in den Extruder eingebracht. Die Mischzeit wird bekanntermaßen durch die Mischzeitcharakteristik des verwendeten Rühr- bzw. Mischorgans im Reaktor bestimmt. Die Mischeinheit kann beispielsweise Rührorgane, wie Anker-, Finger-, Propeller-, Impeller-, MIG-, Schrägblatt-, Alpha- (Fa. Stelzer) oder Sigma-Rührer (Fa. Stelzer) enthalten. Alternativ kann der Reaktor auch mit Mischern nach dem Rotor-Statorprinzip oder mit Leitstrahlmischern ausgerüstet sein.

Im Falle der kontinuierlichen Herstellung der Vormischung wird beispielsweise der Polyvinylesterlösung außerhalb des Extruders in kontinuierlicher Weise Katalysatorlösung zugeführt, vorzugsweise innerhalb einer Mischeinheit, und die so erhaltene Vormischung wird kontinuierlich in den Extruder eingebracht. Bevorzugte Mischeinheiten sind hierbei passive Mischer, wie Mischrohre mit statischen Mischelementen (Statik-Mischer), beispielsweise von der Fa. Sulzer oder Fluitec, oder Rotor-Stator-Mischer oder Kombinationen aus beidem. Besonders bevorzugt sind Statik-Mischer, wie Mischrohr.

Die Neutralisierungsmittel sind im Allgemeinen saure oder basische Reagentien. Durch Zugabe der Neutralisierungsmittel wird die Umsetzung der Polyvinylester zu Polyvinylalkoholen bekanntermaßen beendet. Bei sauer katalysierter Umesterung werden als Neutralisierungsmittel basische Reagentien bevorzugt, wie beispielweise Hydroxide, Alkoholate und Carbonate von Alkali- oder Erdalkalimetallen. Bevorzugt werden die Hydroxide von Lithium, Natrium und Kalium; besonders bevorzugt wird Natriumhydroxid. Bei der bevorzugten alkalisch katalysierten Umesterung werden saure Reagentien bevorzugt, wie Mineralsäuren oder organische Säuren, insbesondere Carbonsäuren. Bevorzugte saure Reagentien haben pKs-Werte von kleiner als 7, besonders bevorzugt kleiner als 5. Geeignete Mineralsäuren sind beispielsweise Salzsäure, Salpetersäure und vorzugsweise Schwefelsäure; geeignete organische Säuren sind beispielsweise Oxalsäure, Ameisensäure, aliphatische und aromatische Sulfonsäuren und Halogencarbonsäuren, wie Mono-, Di- oder Trichloressigsäure und vorzugsweise Essigsäure.

Das Neutralisierungsmittel kann in reiner Form oder vorzugsweise in Form einer Lösung in einem oder mehreren Lösungsmitteln eingesetzt werden. Als Lösungsmittel sind die oben genannten Zusatzstoffe oder die oben genannten alkoholischen Lösungsmittel besonders geeignet, insbesondere Methylacetat und Methanol. Hierbei wird das Neutralisierungsmittel bevorzugt in Methylacetat oder dem alkoholischen Lösungsmittel eingesetzt, in dem auch der Polyvinylester eingesetzt wird.

Die Neutralisierungsmittel werden vorzugsweise in äquimolaren Mengen wie die Katalysatoren eingesetzt. Bevorzugt ist es auch, einen Überschuss an Neutralisierungsmittel zuzugeben, beispielsweise einen 20%igen, vorzugsweise einen 10%igen molaren Überschuss an Neutralisierungsmittel, je bezogen auf die eingesetzten molaren Mengen an Katalysator. Alternativ ist es auch möglich, das Neutralisierungsmittel in einem Unterschuss zuzugeben, beispielsweise einem 20%igen, vorzugsweise einem 10%igen molaren Unterschuss an Neutralisierungsmittel, je bezogen auf die eingesetzten molaren Mengen an Katalysator.

Der Extruder umfasst im Allgemeinen ein Gehäuse, eine Antriebseinheit, eine Plastifiziereinheit aus einer oder mehreren mit Transport- und/oder Knetelementen versehenen rotierenden Achsen (Schnecken) sowie eine Steuereinheit. Längs der Schnecke erstrecken sich in Transportrichtung üblicherweise mehrere Zonen, die vorzugsweise mindestens eine Einzugszone, wenigstens eine Reaktionszone, eine Neutralisierungszone und eine Austragszone umfassen. Jede Zone kann wiederum einen oder mehrere Zylinder als kleinste unabhängige Einheit umfassen.

Beispiele für Extruder sind Einschneckenextruder, Mehrwellenextruder, Planetenwalzenextruder und vorzugsweise Doppelschneckenextruder, insbesondere mit paralleler Anordnung der Schnecken, die vorzugsweise ineinander greifen. Mehrere Schnecken können gegensinnig oder vorzugsweise gleichsinnig drehend, kämmend oder dicht kämmend ausgeführt und gegebenenfalls zusätzlich mit Knetscheiben und/oder rückfördernden Elementen ausgestattet sein. Zur Entfernung von Lösungsmitteln, Hydrolyseprodukten und/oder Wasser können die Extruder mit einer oder mehreren Entgasungszonen ausgestattet sein.

Bevorzugt sind Extruder mit 5 bis 18, besonders bevorzugt 10 bis 16 und am meisten bevorzugt 12 bis 15 Zylindern. Das Verhältnis der Länge des Extruders zu seinem Durchmesser beträgt pro Zylinder vorzugsweise 1 bis 10, besonders bevorzugt 2 bis 6 und am meisten bevorzugt 4. In einer bevorzugten Ausführungsform enthält der Extruder zu mindestens 70% fördernde Elemente, bezogen auf die Länge der Schnecke. Besonders bevorzugt enthält der Extruder ausschließlich fördernde Elemente, gegebenenfalls Knetscheiben, gegebenenfalls mischende Elemente oder keine rückfördernden Elemente.

In einer Ausführungsform kann der Extruder in einer ersten Einzugszone mit der alkoholischen Lösung der Polyvinylester und in einer zweiten Einzugszone mit der alkoholischen und/oder wässrigen Lösung des Katalysators beschickt werden. Diese Zuführungen können auch in einer gemeinsamen ersten Einzugszone erfolgen. In einer alternativen Ausführungform wird die oben beschriebene Vormischung, die den Polyvinylester und den Katalysator enthält, über eine Einzugszone in den Extruder eingebracht.

Die Umsetzung des Polyvinylesters, d.h. die Umesterung bzw. die Verseifung des Polyvinylesters, erfolgt im Allgemeinen im Wesentlichen in einer folgenden Reaktionszone des Extruders. Dabei werden bekanntermaßen bei einer Alkoholyse Alkylmonocarbonsäureester und bei einer Hydrolyse Monocarbonsäuren vom Polyvinylester gebildet (Spaltprodukte). Die Temperatur in der Reaktionszone beträgt vorzugsweise 20 bis 100°C, besonders bevorzugt 20 bis 80 °C, noch mehr bevorzugt 40 bis 75°C und am meisten bevorzugt 45 bis 75°C.

Erfindungswesentlich ist, dass das Neutralisierungsmittel dem Reaktionsgemisch im Extruder zugesetzt wird. Dadurch wird die Umsetzung bzw. Umesterung der Polyvinylester schon im Extruder abgebrochen und nicht erst anschließend in einer weiteren Vorrichtung bzw. nicht erst außerhalb des Extruders. Das Neutralisierungsmittel wird im Allgemeinen über eine oder mehrere weitere Einzugszonen in den Extruder eingebracht. Diese Einzugszonen befinden sich in der Neutralisierungszone, das heißt räumlich hinter der Reaktionszone bzw. der Reaktionszone nachgelagert. Bei Zugabe des Neutralisierungsmittels hat das Reaktionsgemisch eine Temperatur von vorzugsweise 20 bis 150°C, besonders bevorzugt 40 bis 110°C und am meisten bevorzugt 45 bis 80°C.

Am Extruderkopf bzw. an der Austrittsöffnung oder der Austragszone des Extruders, d.h. räumlich nach der Neutralisierungszone, kann der Polyvinylalkohol aus dem Extruder entnommen und gegebenenfalls einer weiteren Verarbeitung zugeführt werden, beispielsweise direkt in eine wässrige Polyvinylalkohol-Lösung überführt werden.

Besonders bevorzugte Extruder weisen mindestens die folgenden sukzessiv angeordneten Zonen auf: eine Einzugszone für die Zufuhr der Polyvinylester oder der Vormischung (1. Zone) und gegebenenfalls eine Einzugszone für den Katalysator (2. Zone); Mischzone (3. Zone); Reaktionszone (4. Zone); Neutralisierungszone (5. Zone); gegebenenfalls Entgasungszone mit einem oder mehreren Zylindern zur Entgasung bei Atmosphärendruck und/oder unter Vakuum (6. Zone); Austragszone (7. Zone), beispielsweise in Form einer Austragsdüse, -blende oder sonstigen Austrittsöffnung. Am meisten bevorzugte Extruder weisen die folgenden Zonen in folgender Reihenfolge auf: ein oder zwei Einzugszonen; Mischzone; Reaktionszone; Neutralisierungszone und Austragszone. Darüber hinaus können eine oder mehrere weitere Zonen, wie z. B. Mischzonen, Aufheiz/Abkühlzonen, Entgasungszonen und/oder Homogenisierungszonen vorgesehen sein.

Die 1. Zone ist die Einzugszone für die Zufuhr der eingesetzten Polyvinylester bzw. die Vormischung und umfasst in der Regel 1 bis 3, vorzugsweise 2 bis 3 Zylinder. Diese Zone muss zwischen Schnecke und Gehäuse so gegenüber der Antriebsvorrichtung versiegelt sein, dass die Edukte nicht rückwärtig aus dem Extruder austreten können. In dieser 1. Zone ist die verwendete Schnecke vorzugsweise doppelgängig. Dies kann durch die Verwendung von Förderelementen in diesem Bereich der Schnecke unterstützt werden. Der erste Zylinder in Stromrichtung ist in der Regel geschlossen. Die Stromrichtung bezieht sich hierbei auf den Gang des Massestroms ausgehend von der ersten Einzugszone (1. Zone) über die weiteren Zonen hin zur Austragszone (7. Zone). In der Regel befindet sich am ersten oder zweiten, insbesondere am zweiten Zylinder die Zufuhrvorrichtung zur Beschickung des Extruders mit der Polyvinylester-Lösung bzw. der Vormischung. Diese werden beispielsweise über eine Dosierpumpe, beispielsweise über eine Kolben-, Exzenterschnecken- oder Zahnrad-Pumpe, zugeführt. Es hat sich als vorteilhaft erwiesen, alle Zylinder der ersten Einzugszone (1. Zone) bis einschließlich des mit der Zufuhrvorrichtung ausgestatteten Zylinders bei einer Temperatur von Umgebungstemperatur oder darunter zu halten. Ein geeigneter Temperaturbereich ist beispielsweise 10 bis 30°C, insbesondere 15 bis 25°C. Dazu können diese Zylinder leicht gekühlt werden, beispielsweise mit kaltem Wasser. Der an den mit der Zufuhrvorrichtung für die Polyvinylester-Lösung bzw. die Vormischung ausgestatteten Zylinder sich in Stromrichtung anschließende Zylinder, d.h. beispielsweise der zur ersten Einzugszone (1. Zone) oder der zur zweiten Einzugszone für den Katalysator(2. Zone) gehörende dritte Zylinder in Stromrichtung wird vorteilhafterweise auf eine Temperatur im Bereich von 30 bis 100°C, insbesondere 40 bis 80°C, noch mehr bevorzugt 45 bis 75°C und besonders bevorzugt 45 bis 70°C erhitzt.

Die etwaige 2. Zone kann als Einzugszone für die Katalysator-Lösung dienen und umfasst in der Regel einen Zylinder mit einer Zufuhrvorrichtung zur Beschickung des Extruders mit der Katalysator-Lösung. Die Schnecke kann in dieser Zone zur Gewährleistung einer guten Vermischung der Komponenten mit Mischelementen, beispielsweise rückvermischenden Elementen, ausgestattet sein. Die Katalysator-Lösung kann mit einer Dosier-Pumpe, beispielsweise einer Kolben-, Exzenterschnecken- oder Zahnrad-Pumpe, zugeführt werden. Diese Zuführung kann beispielsweise über einen nach außen abgeschlossenen Zufuhrstutzen unter Druck erfolgen. Gegebenenfalls kann die Katalysator-Lösung vor der Zufuhr vorgewärmt werden, beispielsweise auf eine Temperatur im Bereich von 30 bis 80°C.

Bei der 3. Zone handelt es sich vorzugsweise um eine Mischzone. Diese Zone besteht in der Regel aus einem Zylinder. Die Schnecke ist in diesem Bereich mit Förderelementen und gegebenenfalls mit mischenden oder rückvermischenden Elementen ausgestattet. Die 3. Zone wird teilweise oder vorzugsweise vollständig auf eine Temperatur von 20 bis 150°C, bevorzugt 40 bis 100°C, besonders bevorzugt 45 bis 80°C und am meisten bevorzugt 45 bis 75°C erhitzt.

Die 4. Zone ist die eigentliche Reaktionszone und umfasst in der Regel mehrere, beispielsweise 2 bis 15, bevorzugt 3 bis 12 und besonders bevorzugt 5 bis 10 geschlossene Zylinder. Die Schnecke ist in diesem Bereich vorteilhafterweise so ausgelegt, dass Förderelemente mit Knetscheiben alternieren. Die 4. Zone wird teilweise oder bevorzugt vollständig auf eine Temperatur von 20 bis 150°C, bevorzugt 40 bis 100°C, besonders bevorzugt 45 bis 80°C und am meisten bevorzugt 45 bis 75°C erhitzt.

Die 5. Zone ist die Neutralisierungszone und enthält die Einzugszone, insbesondere eine Düse als Zugabestelle für das Neutralisierungsmittel und umfasst in der Regel ein oder mehrere, insbesondere ein oder zwei geschlossene Zylinder. Die Schnecke ist in diesem Bereich vorteilhafterweise so ausgelegt, dass Förderelemente mit Knetscheiben alternieren. Die 5. Zone wird teilweise oder bevorzugt vollständig auf eine Temperatur von 20 bis 150°C, bevorzugt 40 bis 100°C, besonders bevorzugt 45 bis 80°C und am meisten bevorzugt 45 bis 75°C erhitzt.

Die etwaige 6. Zone ist eine Entgasungszone mit einem oder mehreren, beispielsweise ein bis drei, Zylindern zur Entgasung bei Atmosphärendruck und/oder unter Vakuum. In der Entgasungszone kann das Produkt getrocknet werden. Es hat sich als vorteilhaft erwiesen, die Entgasungszone so auszulegen, dass sie einen Zylinder mit Entgasungsstutzen zur Entgasung bei Atmosphärendruck, gefolgt von einem geschlossenen Zylinder, und einen mit Entgasungsstutzen zur Entgasung unter Vakuum ausgestatteten Zylinder umfasst. Die Schnecke wird dabei vorteilhafterweise so ausgelegt, dass sie im Bereich der mit den Entgasungsstutzen ausgestatteten Zylinder Förderelemente und dazwischen, insbesondere im Bereich des geschlossenen Zylinders, Knetscheiben aufweist. In dieser Entgasungszone können die noch vorhandenen flüchtigen Bestandteile wie Lösungsmittel, Spaltprodukte sowie gegebenenfalls zugegebenes Wasser mit darin enthaltenen Verunreinigungen zu wesentlichen Anteilen entfernt werden. Der auf diese Weise entnommene Gasstrom kann beispielsweise über eine mit dem Extruder verbundene Kondensationseinheit kondensiert und, sofern gewünscht, weiteren Verarbeitungs- oder Aufarbeitungsschritten, wie der Trennung der Komponenten in Destillationskolonnen, zugeführt werden. Die 6. Zone wird teilweise oder bevorzugt vollständig auf eine Temperatur von 20 bis 150°C, bevorzugt 40 bis 100°C, besonders bevorzugt 45 bis 80°C und am meisten bevorzugt 45 bis 75°C erhitzt.

Anschließend folgt die Austragszone (7. Zone). Diese umfasst beispielsweise eine Homogenisierungszone vor der eigentlichen Austragsvorrichtung. Zusätzlich kann die Zwangsförderung unterbrochen werden, um einen intensiveren Materialaustausch zu erzwingen. Die eigentliche Austragsvorrichtung besteht im Wesentlichen aus dem Extruderkopf bzw. der angeschlossenen Austragsdüse, -blende oder sonstigen Austrittsöffnung, beispielsweise einer Runddüse, Breitschlitzdüse oder Lochblende. Die Temperatur in der Austragszone (einschließlich einer etwaigen vorhandenen Homogenisierungszone und der Austrittsöffnung), beträgt vorzugsweise weniger als 100°C. Die Einhaltung des beschriebenen Temperaturprofils in den verschiedenen Extruderzonen ist vorteilhaft zur Steuerung der Konversionsrate der Polyvinylester zu Polyvinylalkohol sowie der Produktqualität.

Zur Durchführung des erfindungsgemäßen Verfahrens werden die Schnecken des Extruders vorzugsweise mit einer Rotationsgeschwindigkeit im Bereich von 10 bis 1200 Upm, besonders bevorzugt 25 bis 500 Upm, noch mehr bevorzugt 30 bis 350 Upm und am meisten bevorzugt 30 bis 200 Upm betrieben. Allgemein lassen sich höhere Hydrolysegrade durch niedrigere Rotationsgeschwindigkeiten erreichen.

Die Verweilzeit der Reaktionsmischung im Extruder beträgt vorzugsweise weniger als 30 min, besonders bevorzugt weniger als 10 min und/oder vorzugsweise mindestens 0,2 min, besonders bevorzugt mindestens 0,5 min und liegt insbesondere im Bereich von 0,2 bis 5 min, besonders bevorzugt 0,5 bis 5 min und am meisten bevorzugt 0,5 bis 3 min. Beispielsweise kann die Verweilzeit je nach Füllgrad, mit dem der Extruder betrieben wird, angepasst werden. Mit längeren Verweilzeiten im Extruder kann in der Regel auch der Hydrolysegrad der Polyvinylalkohole gesteigert werden.

Die am Extruderkopf bzw. an der Austrittsöffnung erhaltenen Polyvinylalkohole (Extrudat) werden in der Regel in Form eines kontinuierlichen Strangextrudats mit vorzugsweise konstantem Querschnitt, beispielsweise in Form eines Bandes oder Stranges, insbesondere mit rundem, ovalem, abgerundetem oder flachem und breitem Querschnitt, erhalten und können entnommen und/oder weiter verarbeitet werden. Das Extrudat kann gegebenenfalls direkt einer Verwendung zugeführt, zwischengelagert oder einer weiteren Verarbeitung, insbesondere einer Trocknung oder Aufarbeitung, unterzogen werden.

Das Extrudat fällt im Allgemeinen in Form eines feuchten Pulvers an und kann durch Trocknung in eine granuläre, insbesondere pulverige Form überführt werden. So erhaltene Pulver sind rieselfähig.

Die Aufarbeitung kann, sofern überhaupt erforderlich oder gewünscht, auf etablierte Weise erfolgen. Zur Aufarbeitung kann das Extrudat beispielsweise gewaschen werden. Das Waschen des Extrudats erfolgt beispielsweise mit Wasser oder vorzugsweise mit einem der oben genannten alkoholischen Lösungsmittel, insbesondere Methanol. Dadurch kann das Extrudat beispielsweise von niedermolekularen Umsetzungsprodukten, insbesondere salzartigen Spaltprodukten, wie Natriumacetat, befreit werden.

Die Trocknung erfolgt vorzugsweise nicht im Extruder. Das Trocknen des Extrudats oder des aufgearbeiteten Extrudats erfolgt vorzugsweise außerhalb des Extruders in einer separaten Vorrichtung, beispielsweise in einem Kontakttrockner, wie Dünnschicht-, Konus-, oder Schaufeltrockner, die vorteilhafterweise im Vakuum betrieben werden, oder in einem konvektive Trockner, wie Stromrohr-, Zyklon-, Konvex-, Wirbelschicht-, oder Drehrohrtrockner. Bevorzugt sind Kontakttrockner.

Das Extrudat kann gegebenenfalls auch durch Pressen oder Zentrifugieren weiter aufkonzentriert werden.

Das Extrudat oder das mittels Pressen oder Zentrifugieren aufkonzentrierte Extrudat kann einem weiteren Reaktor, beispielsweise einem Rührkessel, zugeführt werden, in dem destillativ oder durch direkte Dampfeinspeisung die flüchtigen Bestandteile, wie restliche Lösemittel oder Spaltprodukte, ausgetrieben werden. Im Falle der Destillation kann Polyvinylalkohol beispielsweise in granulärer, insbesondere pulveriger Form erhalten werden. Im Falle der Dampfeinspeisung kann durch Kondensation des eingespeisten Dampfs eine wässrige Polyvinylalkohollösung erhalten werden. Dadurch können zusätzliche Schritte zum Auflösen von festem Polyvinylalkohol vermieden werden.

Die Polyvinylalkohole können teilverseift oder vollverseift sein und haben vorzugsweise einen Hydrolysegrad von 50 bis 100 Mol-%. Vollverseifte Polyvinylalkohole haben einen Hydrolysegrad von vorzugsweise 96 bis 99,9 Mol-% und besonders bevorzugt 98 bis 99,5 Mol-%. Bevorzugt sind teilverseifte Polyvinylalkohole mit einem Hydrolysegrad von im Allgemeinen 70 bis 95 Mol-%, insbesondere 85 bis 95 Mol-%. Der Hydrolysegrad bezeichnet wie üblich das Molverhältnis aus den Vinylalkohol-Einheiten und der Gesamtsumme aus den Vinylalkohol- und Vinylester-Einheiten der Polyvinylalkohole.

Die Polyvinylalkohole haben eine Höpplerviskosität von vorzugsweise 0,4 bis 60 mPa·s, mehr bevorzugt 2 bis 60 mPa·s, besonders bevorzugt 2 bis 30 mPa·s und am meisten bevorzugt 3 bis 25 mPa·s (bestimmt nach der Kugelfallmethode nach Höppler bei 20°C gemäß DIN 53015 in 4%iger wässriger Lösung).

Vorteilhafterweise werden nach dem erfindungsgemäßen Verfahren Polyvinylalkohole mit einheitlichen Verseifungszahlen und somit mit einheitlichem Verseifungsgrad zugänglich. Es können Polyvinylalkohole mit Blockstruktur erhalten werden. Hierbei erwiesen sich die einzelnen Maßnahmen und bevorzugten Ausführungsformen der vorliegenden Erfindung als besonders vorteilhaft, wie das Setup des Extruders, Verweilzeiten im Extruder, Temperaturen im Extruder, Umdrehungszahlen, insbesondere der Einsatz des Polyvinylesters und des Katalysators in Form einer Vormischung und, vor allen Dingen, die Zugabe des Neutralisierungsmittels im Extruder. Überraschenderweise trat keine signifikante Diffusion des Neutralisierungsmittels von der Neutralisationszone in die Reaktionszone auf, was zu uneinheitlichen bzw. unvollständigen Verseifungsreaktionen geführt hätte.

Das erfindungsgemäße Verfahren ist sowohl für großtechnische Umsetzungen als auch für mengenmäßig kleine Ansätze bestens geeignet und damit flexibel einsetzbar. Es sind Polyvinylalkohole mit unterschiedlichsten Verseifungsgraden und Viskositäten erhältlich. Hierbei ist die Reaktionsführung einfach und variabel gestaltbar. Es kommt etabliertes Equipment zum Einsatz. Hierbei können die Umesterung von Polyvinylester, die Neutralisation und gegebenenfalls das Trocknen in einer einzigen Vorrichtung erfolgen. Auf zusätzliches Lösungsmittel für die Neutralisation des Verseifungsproduktes kann vollständig verzichtet werden und dennoch erfolgt die Neutralisation schnell und kontrolliert. Das aufwändige und mühsame Zerkleinern oder Auflösen des Verseifungsprodukts vor der Neutralisation kann bei der erfindungsgemäßen Vorgehensweise somit entfallen.

Die Polyvinylalkohole eignen sich als Schutzkolloid für die Emulsionspolymerisation von ethylenisch ungesättigten Monomeren oder als Ausgangsstoff zur Herstellung von Polyvinylbutyral. Ebenso können die Polyvinylalkohole als Einsatzstoff für die Herstellung von Fasern, Klebstoffen, Textil-Warp-Sizing, Papier-Sizing oder zur Papierbeschichtung eingesetzt werden.

Die nachfolgenden Beispiele dienen der weiteren Erläuterung der Erfindung.

### Aufbau des Extruders:

Es wurde ein Doppelschnecken-Extruder ZSE27 der Firma Leistritz mit 13 Zylindern und Austragsdüse verwendet. Der Extruder wies die folgenden Zonen auf:
- 1. Zone:: Einzugszone für die Polyvinylesterlösung bzw. die Vormischung;
- 2.Zone:: Einzugszone für den Katalysator;
- 3.Zone:: Mischzone;
- 4.Zone:: Reaktionszone;
- 5. Zone:: Neutralisierungszone;
- 6. Zone:: Entgasungszone zur Entgasung unter Vakuum;
- 7. Zone:: Austragszone in Form einer Austragsdüse.

### Bestimmung der Höpplerviskosität:

Für Polyvinylacetat erfolgte die Bestimmung der Höpplerviskosität bei 20°C gemäß DIN 53015 in 10%iger Ethylacetat-Lösung.

Für Polyvinylalkohol erfolgte die Bestimmung der Höpplerviskosität bei 20°C gemäß DIN 53015 in 4%iger wässriger Lösung.

### Brookfield-Viskosität:

Die Bestimmung der Brookfield-Viskositäten der Lösungen von Polyvinylacetat in Methanol erfolgte mit einem Brookfieldviskosimeter, nach Temperierung auf 23°C, unter Verwendung von Spindel 1 bzw. 2 bei 20 Umdrehungen pro Minute. Die im Einzelfall eingesetzte Spindel, Lösungsmittel und Feststoffgehalt sind für die jeweilige Messung angegeben.

### Bestimmung des Molekulargewichts Mw und des Molekulargewichts Mn:

Das gewichtsmittlere Molekulargewicht Mw und das zahlenmittlere Molekulargewicht Mn der Polyvinylalkohole wurde bestimmt mittels Size Exclusion Chromatography (SEC) gegen Polyethylenoxid-Standard 22000, in 100 mmol/L Natriumnitrat mit 10% Acetonitril, bei 40°C, Flow Rate 1,0 ml/min und Triple-Detektion (Kleinwinkellichtstreu-Detektor, Brechungsindex-Detektor und Viskosimetrie-Detektor von Malvern-Viscotek) auf einem Säulenset Ultrahydrogel 1000, 500, 250 von Waters Corp. USA mit einem Injektionsvolumen von 100 µl.

### Beispiel 1:

In den oben beschriebenen Extruder wurde Polyvinylacetat (Höpplerviskosität: 4,2 mPa·s) in Form einer methanolischen Lösung über den Einzugsstutzen der ersten Einzugszone (1. Zone) mit Hilfe einer Dosierpumpe bei Raumtemperatur kontinuierlich zugeführt.

Über die zweite Einzugszone (2. Zone) wurde eine 5 Gew.-%ige methanolische Natronlauge-Lösung kontinuierlich so zu dosiert, dass eine Einsatzmenge von 1,9 Gew.-% Natriumhydroxid, bezogen auf das Trockengewicht des eingesetzten Polyvinylacetats, erreicht wurde.

In die 5. Zone wurde mit Hilfe einer Dosierpumpe eine 30 Gew.-%ige Lösung von Essigsäure in Methylacetat kontinuierlich zudosiert. Die Menge wurde so gewählt, dass ein 10%iger molarer Überschuss an Essigsäure erreicht wurde, bezogen auf das eingesetzte Natriumhydroxid.

Die zweite Einzugszone (2. Zone) wurde auf 25°C temperiert. Die Zylinder 3 bis 13 (3. bis 7. Zone) wurden auf eine Temperatur von 65°C temperiert.

Die Rotationsgeschwindigkeit der Schnecken betrug 300 UpM.

Es wurde ein Polyvinylalkohol mit folgenden Merkmalen erhalten: Hydrolysegrad von 88,5 mol%, Höpplerviskosität von 3,7 mPa·s, zahlenmittleres Molekulargewicht Mn von 12.700 g/mol, gewichtsmittleres Molekulargewicht Mw von 27.960 g/mol und eine Uneinheitlichkeit Mw/Mn von 2,3 auf.

### Beispiel 2:

Dem eingangs beschriebenen Extruder wurde ein Statikmischer der Fa. Fluitec mit Mischelementen des Typs CSE-X als Mischeinheit vorgeschaltet. In den Statikmischer wurde Polyvinylacetat (Höpplerviskosität: 4,2 mPa·s) in Form einer methanolischen Lösung über eine Dosierpumpe und eine 5 Gew.-%ige methanolische Natronlauge-Lösung über eine Fluitec Impfstelle eingebracht. Die Einsatzmenge an Natriumhydroxid betrug 1,9 Gew.-%, bezogen auf das Trockengewicht des eingesetzten Polyvinylacetats. Mit der Mischeinheit wurde eine methanolische Vormischung aus Polyvinylacetat und Natriumhydroxid kontinuierlich hergestellt.

Die Vormischung wurde in die zweite Einzugszone (2. Zone) des Extruders mit Hilfe einer Dosierpumpe bei Raumtemperatur kontinuierlich zugeführt.

Die Zylinder 3 bis 13 (3. bis 7. Zone) wurden auf 60°C temperiert. Die Rotationsgeschwindigkeit der Schnecken betrug 200 UpM.

Die Zugabe von Essigsäure erfolgte wie in Beispiel 1 beschrieben.

Es wurde ein Polyvinylalkohol mit einem Hydrolysegrad von 87,6 mol% und einer Höpplerviskosität von 3,9 mPa·s erhalten.

### Beispiel 3:

Es wurde analog zu Beispiel 2 verfahren, mit folgenden Unterschieden: die Temperatur in den Zylindern 3 bis 13 (3. bis 7. Zone) betrug 55°C, und die Rotationsgeschwindigkeit der Schnecken wurde auf 100 UpM verringert.

Es wurde ein Polyvinylalkohol mit einem Hydrolysegrad von 89,2 mol% und einer Höpplerviskosität von 3,8 mPa·s erhalten.

### Beispiel 4:

Es wurde analog zu Beispiel 2 verfahren, mit folgenden Unterschieden: die Temperatur in den Zylindern 3 bis 13 (3. bis 7. Zone) betrug 50°C, die Rotationsgeschwindigkeit der Schnecken 50 UpM, und es wurden 1,1 Gew.-% Natriumhydroxid eingesetzt, bezogen auf das Trockengewicht des eingesetzten Polyvinylacetats.

Es wurde ein Polyvinylalkohol mit einem Hydrolysegrad von 88,3 mol% und einer Höpplerviskosität von 3,9 mPa·s erhalten.

### Beispiel 5:

Es wurde analog zu Beispiel 3 verfahren, jedoch hatte das eingesetzte Polyvinylacetat eine Höpplerviskosität von 5,2 mPa·s.

Es wurde ein Polyvinylalkohol mit einem Hydrolysegrad von 88,8 mol% und einer Höpplerviskosität von 4,4 mPa·s erhalten.

### Beispiel 6:

Es wurde analog zu Beispiel 5 verfahren, jedoch hatte das eingesetzte Polyvinylacetat eine Höpplerviskosität von 13,7 mPa·s.

Es wurde ein Polyvinylalkohol mit einem Hydrolysegrad von 87,2 mol% und einer Höpplerviskosität von 9,3 mPa·s erhalten.

### Beispiel 7:

Es wurde analog zu Beispiel 5 verfahren, jedoch hatte das eingesetzte Polyvinylacetat eine Höpplerviskosität von 79,6 mPa·s.

Es wurde ein Polyvinylalkohol mit einem Hydrolysegrad von 86,3 mol% und einer Höpplerviskosität von 26,0 mPa·s erhalten.

### Beispiel 8:

Es wurde analog zu Beispiel 3 verfahren, jedoch wurde an Stelle der methanolischen Polyvinylacetat-Lösung eine entsprechende Lösung eines Vinylacetat-VeoVa10-Copolymers (1 Gew.-% VeoVa10; VeoVa10 ist der Versatic-10-säurevinylester; Höpplerviskosität: 4,2 mPa·s) eingesetzt.

Es wurde ein Polyvinylalkohol mit einem Hydrolysegrad von 88,8 mol% und einer Höpplerviskosität von 4,0 mPa·s erhalten.

### Beispiel 9:

Es wurde analog zu Beispiel 3 verfahren, jedoch mit einer Temperatur in den Zylindern 3 bis 13 (3. bis 7. Zone) von 65°C.

Es wurde ein Polyvinylalkohol mit einem Hydrolysegrad von 95,2 mol% und einer Höpplerviskosität von 3,8 mPa·s erhalten.

### Beispiel 10:

Es wurde analog zu Beispiel 9 verfahren, jedoch mit einer Temperatur in den Zylindern 3 bis 13 (3. bis 7. Zone) von 75°C.

Es wurde ein Polyvinylalkohol mit einem Hydrolysegrad von 98,3 mol% und einer Höpplerviskosität von 3,7 mPa·s erhalten.

### Beispiel 11:

Es wurde analog zu Beispiel 6 verfahren, mit folgenden Unterschieden: die Temperatur in den Zylindern 3 bis 13 (3. bis 7. Zone) betrug 50°C, die Rotationsgeschwindigkeit der Schnecken 80 UpM, und es wurden 2,1 Gew.-% Natriumhydroxid eingesetzt, bezogen auf das Trockengewicht des eingesetzten Polyvinylacetats.

Man erhielt einen Polyvinylalkohol mit einem Hydrolysegrad von 97,3 mol% und einer Höpplerviskosität von 9,2 mPa·s.

### Beispiel 12:

Es wurde analog zu Beispiel 4 verfahren, mit folgenden Unterschieden: es wurden eine 5 Gew.-%ige Natriummethanolat-Lösung in Methanol und, bezogen auf das Trockengewicht des eingesetzten Polyvinylacetats, 1,1 Gew.-% Natriummethanolat eingesetzt.

Man erhielt einen Polyvinylalkohol mit einem Hydrolysegrad von 88,8 mol% und einer Höpplerviskosität von 4,0 mPa·s.

### Beispiel 13:

Es wurde analog zu Beispiel 8 verfahren, jedoch wurde an Stelle der methanolischen Polyvinylacetat-Lösung eine entsprechende Lösung eines Vinylacetat-Isopropenylacetat-Copolymers (20 Gew.-% Isopropenylacetat; Höpplerviskosität: 2,2 mPa·s) eingesetzt.

Es wurde ein Polyvinylalkohol mit einem Hydrolysegrad von 97,4 mol% und einer Höpplerviskosität von 2,4 mPa·s erhalten.

### Vergleichsbeispiel 14:

Es wurde analog zu Beispiel 4 verfahren, jedoch wurde keine Essigsäurelösung in den Extruder dosiert. Stattdessen wurde das aus der Austragszone des Extruders (7. Zone) austretende Rohprodukt in einen Behälter geführt, in dem eine für die Neutralisierung der Natronlauge-Lösung ausreichende Menge an methanolischer Essigsäurelösung vorgelegt war und gerührt wurde. Der erhaltene Polyvinylalkohol wies einen Hydrolysegrad von 89,4 mol% und eine Höpplerviskosität von 3,9 mPa·s auf.

Die Beispiele zeigen, dass mit dem erfindungsgemäßen Verfahren sowohl teilverseifte als auch vollverseifte bzw. niedrigviskose oder hochviskose Polyvinylalkohole, sowie modifizierte als auch unmodifizierte Polyvinylalkohole gezielt hergestellt werden können. Somit eröffnet das erfindungsgemäße Verfahren einen sehr flexiblen, gezielten Zugang zu Polyvinylalkoholen mit unterschiedlichsten physikalischen oder chemischen Eigenschaften.

### Verseifungszahlverteilung:

Die Bestimmung der Verseifungszahlverteilung der Polyvinylalkohole erfolgte in Anlehnung an Publikationen der Loughborough Universität in Zusammenarbeit mit der Fa. Polymer Laboratories (E. Meehan, S.P. Reid, E. Samios, J.V. Dawkins, Macromol. Symp. 110, 65-80 (1996) und J.V. Dawkins, T.A. Nicholson, A.J. Handley, E. Meehan, A. Nevin, P.L. Shaw, Polymer 40, 7331-7339 (1999)) durch Reversed Phase Gradienten HPLC. Als Trägermaterial wurde hierbei ein großporiges, polymeres Reversed Phase Material auf Basis Styrol/p-Divinylbenzol der Fa. Polymer Laboratories (PLRP-S 4000 Å, 8 µm, 50 x 4.6 mm Säule) verwendet. Als Laufmittel diente ein Methanol/Wasser Gradient mit steigendem Methanolgehalt. Zur Detektion wurde ein evaporativer Lichtstreudetektor eingesetzt, dessen Signalintensität in mV ausgegeben wird und mit der Anzahl von Polyvinylalkoholen mit einem bestimmten Hydrolysegrad korreliert. Bei kürzeren Retentionszeiten werden Polyvinylalkohol-Anteile mit höheren Hydrolysegraden eluiert, nach und nach folgen die Polyvinylalkohol-Anteile mit sinkenden Hydrolysegraden.

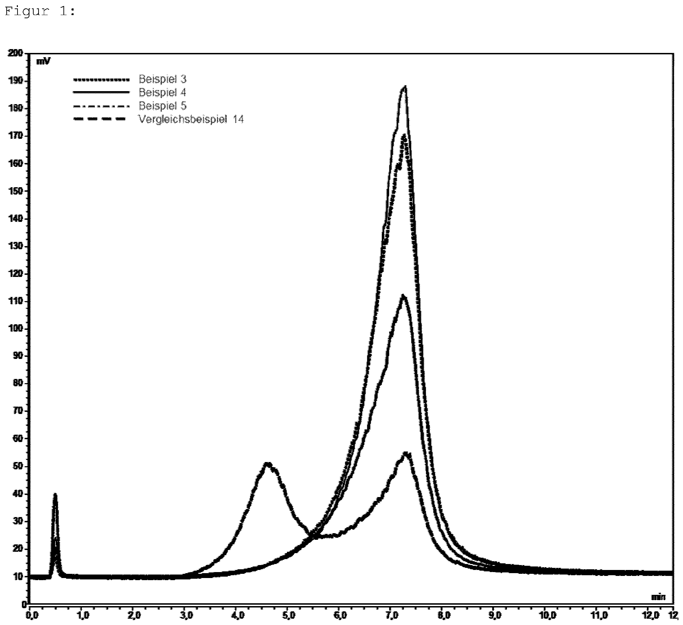

In Figur 1 sind die so erhaltenen Verseifungszahlverteilungen für die Polyvinylalkohole des Vergleichsbeispiels 14 sowie der Beispielen 3, 4 und 5 exemplarisch abgebildet. Das Signal bei einer Retentionszeit von ca. 0,5 min stammt von Natriumacetat.

Eine Retentionszeit von ca. 7 Minuten entspricht einem Hydrolysegrad von 88 mol%. Der Bereich unter 5 Minuten entspricht Hydrolysegraden von 90 bis 100 mol%. Je kürzer die Retentionszeit, desto stärker verseift ist der detektierte Polyvinylalkohol.

Figur 1 veranschaulicht, dass bei Abstoppen der Verseifungsreaktion außerhalb des Extruders Polyvinylalkohole mit sehr inhomogenen Hydrolysegraden erhalten wurden, welche sogar zwei Maxima für unterschiedlich stark verseifte Spezies aufwiesen (Figur 1: Vergleichsbeispiel 14). Polyvinylalkohole mit solch inhomogenen Hydrolysegraden haben nachteilige anwendungstechnische Eigenschaften und zeigen beispielsweise bei Einsatz als Schutzkolloid für die Emulsionspolymerisation von ethylenisch ungesättigten Monomeren eine weitaus weniger effektive Schutzkolloidwirkung als die erfindungsgemäß hergestellten Polyvinylalkohole.

## Patentansprüche

1. Verfahren zur Herstellung von Polyvinylalkoholen mittels katalytischer Umsetzung von alkoholischen Polyvinylesterlösungen in Extrudern, **dadurch gekennzeichnet, dass** die Polyvinylester ausschließlich auf ethylenisch ungesättigten Monomeren basieren und dem Produkt der katalytischen Umsetzung im Extruder ein oder mehrere Neutralisierungsmittel zugegeben werden.

2. Verfahren zur Herstellung von Polyvinylalkohol nach Anspruch 1, **dadurch gekennzeichnet, dass** die Polyvinylester Homo- oder Misch-Polymerisate sind von einem oder mehreren Vinylestern aliphatischer Carbonsäuren mit 1 bis 13 C-Atomen und gegebenenfalls bis zu 50 Gew.-% an einem oder mehreren Comonomeren ausgewählt aus der Gruppe umfassend Olefine, Acrylsäureester oder Methacrylsäureester von unverzweigten oder verzweigten Alkoholen mit 1 bis 22 C-Atomen, Isopropenylacetat, N-Vinylpyrrolidon, N-Vinylcaprolactam, Vinylformamid, ethylenisch ungesättigte Mono- und Dicarbonsäuren, Maleinsäureanhydrid und ethylenisch ungesättigte Carbonsäureamide.

3. Verfahren zur Herstellung von Polyvinylalkohol nach Anspruch 1 oder 2, **dadurch gekennzeichnet, dass** der Gehalt an Polyvinylester in einer alkoholischen Polyvinylesterlösung, in der die katalytische Umsetzung stattfindet, 20 bis 80 Gew.-% beträgt.

4. Verfahren zur Herstellung von Polyvinylalkohol nach Anspruch 1 bis 3, **dadurch gekennzeichnet, dass** die Umsetzung der alkoholischen Polyvinylesterlösungen in Gegenwart von einem oder mehreren sauren oder alkalischen Katalysatoren erfolgt.

5. Verfahren zur Herstellung von Polyvinylalkohol nach Anspruch 1 bis 4, **dadurch gekennzeichnet, dass** ein oder mehrere Polyvinylester und ein oder mehrere Katalysatoren in Form einer Vormischung in einen Extruder eingebracht werden.

6. Verfahren zur Herstellung von Polyvinylalkohol nach Anspruch 1 bis 5, **dadurch gekennzeichnet, dass** der Extruder 5 bis 18 Zylinder enthält.

7. Verfahren zur Herstellung von Polyvinylalkohol nach Anspruch 1 bis 6, **dadurch gekennzeichnet, dass** der Extruder fördernde Elemente, gegebenenfalls Knetscheiben und gegebenenfalls mischende Elemente, aber keine rückfördernden Elemente enthält.

8. Verfahren zur Herstellung von Polyvinylalkohol nach Anspruch 1 bis 7, **dadurch gekennzeichnet, dass** der Extruder die folgenden Zonen in folgender Reihenfolge enthält:
eine Einzugszone für die Zufuhr der Polyvinylester oder die Vormischung (1. Zone); gegebenenfalls eine Einzugszone für den Katalysator (2. Zone); Mischzone (3. Zone); Reaktionszone (4. Zone); Neutralisierungszone (5. Zone); gegebenenfalls Entgasungszone (6. Zone); und Austragszone (7. Zone).

9. Verfahren zur Herstellung von Polyvinylalkohol nach Anspruch 1 bis 8, **dadurch gekennzeichnet, dass** der Extruder eine oder mehrere Schnecken enthält und die Schnecken mit einer Rotationsgeschwindigkeit von 10 bis 1200 Umdrehungen pro Minute betrieben werden.

10. Verfahren zur Herstellung von Polyvinylalkohol nach Anspruch 1 bis 9, **dadurch gekennzeichnet, dass** die Verweilzeit der Reaktionsmischung im Extruder 0,2 bis 5 min beträgt.

## Claims

1. Method for producing polyvinyl alcohols by means of catalytic reaction of alcoholic polyvinyl ester solutions in extruders, **characterized in that** the polyvinyl esters are based solely on ethylenically unsaturated monomers, and one or more neutralizing agents are added to the product of the catalytic reaction in the extruder.

2. Method for producing polyvinyl alcohol according to Claim 1, **characterized in that** the polyvinyl esters are homopolymers or copolymers of one or more vinyl esters of aliphatic carboxylic acids having from 1 to 13 carbon atoms and optionally up to 50% by weight of one or more comonomers selected from the group comprising olefins, acrylic acid esters or methacrylic acid esters of unbranched or branched alcohols having from 1 to 22 carbon atoms, isopropenyl acetate, N-vinylpyrrolidone, N-vinylcaprolactam, vinyl formamide, ethylenically unsaturated mono- and dicarboxylic acids, maleic anhydride and ethylenically unsaturated carboxylic acid amides.

3. Method for producing polyvinyl alcohol according to Claim 1 or 2, **characterized in that** the content of polyvinyl ester in an alcoholic polyvinyl ester solution in which the catalytic reaction takes place is from 20 to 80% by weight.

4. Method for producing polyvinyl alcohol according to Claims 1 to 3, **characterized in that** the reaction of the alcoholic polyvinyl ester solutions takes place in the presence of one or more acidic or alkaline catalysts.

5. Method for producing polyvinyl alcohol according to Claims 1 to 4, **characterized in that** one or more polyvinyl esters and one or more catalysts are introduced in the form of a premixture into an extruder.

6. Method for producing polyvinyl alcohol according to Claims 1 to 5, **characterized in that** the extruder comprises from 5 to 18 cylinders.

7. Method for producing polyvinyl alcohol according to Claims 1 to 6, **characterized in that** the extruder comprises feed elements, optionally kneading disks and optionally mixing elements, but no backfeed elements.

8. Method for producing polyvinyl alcohol according to Claims 1 to 7, **characterized in that** the extruder comprises the following zones in the following order:
an intake zone for feeding of the polyvinyl esters or the premixture (1st zone); optionally an intake zone for the catalyst (2nd zone); mixing zone (3rd zone); reaction zone (4th zone); neutralization zone (5th zone); optional degassing zone (6th zone); and discharge zone (7th zone).

9. Method for producing polyvinyl alcohol according to Claims 1 to 8, **characterized in that** the extruder comprises one or more screws and the screws are operated at a speed of rotation of from 10 to 1200 revolutions per minute.

10. Method for producing polyvinyl alcohol according to Claims 1 to 9, **characterized in that** the dwell time of the reaction mixture in the extruder is from 0.2 to 5 minutes.

## Revendications

1. Procédé pour la préparation de poly(alcools vinyliques) au moyen d'une transformation catalytique de solutions alcooliques de poly(esters de vinyle) dans des extrudeuses, **caractérisé en ce que** les poly(esters de vinyle) sont exclusivement à base de monomères éthyléniquement insaturés et un ou plusieurs agents de neutralisation sont ajoutés au produit de la transformation catalytique dans l'extrudeuse.

2. Procédé pour la préparation de poly(alcool vinylique) selon la revendication 1, **caractérisé en ce que** les poly(esters de vinyle) sont des homopolymères ou des copolymères d'un ou de plusieurs esters vinyliques d'acides carboxyliques aliphatiques comprenant 1 à 13 atomes de carbone et le cas échéant de jusqu'à 50% en poids d'un ou de plusieurs comonomères choisis dans le groupe comprenant les oléfines, les esters de l'acide acrylique ou les esters de l'acide méthacrylique d'alcools non ramifiés ou ramifiés, comprenant 1 à 22 atomes de carbone, l'acétate d'isopropényle, la N-vinylpyrrolidone, le N-vinylcaprolactame, le vinylformamide, les acides monocarboxyliques et dicarboxyliques éthyléniquement insaturés, l'anhydride de l'acide maléique et les amides d'acides carboxyliques éthyléniquement insaturés.

3. Procédé pour la préparation de poly(alcool vinylique) selon la revendication 1 ou 2, **caractérisé en ce que** la teneur en poly (ester de vinyle) dans une solution alcoolique de poly(ester de vinyle), dans laquelle la transformation catalytique a lieu, est de 20 à 80% en poids.

4. Procédé pour la préparation de poly(alcool vinylique) selon la revendication 1 à 3, **caractérisé en ce que** la transformation des solutions alcooliques de poly (ester de vinyle) a lieu en présence d'un ou de plusieurs catalyseurs acides ou alcalins.

5. Procédé pour la préparation de poly(alcool vinylique) selon la revendication 1 à 4, **caractérisé en ce qu'**un ou plusieurs poly(esters de vinyle) et un ou plusieurs catalyseurs sont introduits sous forme d'un mélange préalable dans une extrudeuse.

6. Procédé pour la préparation de poly(alcool vinylique) selon la revendication 1 à 5, **caractérisé en ce que** l'extrudeuse contient 5 à 18 cylindres.

7. Procédé pour la préparation de poly(alcool vinylique) selon la revendication 1 à 6, **caractérisé en ce que** l'extrudeuse contient des éléments de transport, le cas échéant des disques de malaxage et le cas échéant des éléments mélangeurs mais pas d'éléments de transport en retour.

8. Procédé pour la préparation de poly(alcool vinylique) selon la revendication 1 à 7, **caractérisé en ce que** l'extrudeuse contient les zones suivantes dans l'ordre suivait :
une zone d'introduction pour l'alimentation des poly(esters de vinyle) ou du mélange préalable (1ère zone) ; le cas échéant une zone d'introduction pour le catalyseur (2ème zone) ; une zone de mélange (3ème zone) ; une zone de réaction (4ème zone) ; une zone de neutralisation (5ème zone) ; le cas échéant une zone de dégazage (6ème zone) ; et une zone de sortie (7ème zone).

9. Procédé pour la préparation de poly(alcool vinylique) selon la revendication 1 à 8, **caractérisé en ce que** l'extrudeuse contient une ou plusieurs vis et les vis sont exploitées à une vitesse de rotation de 10 à 1200 t/m.

10. Procédé pour la préparation de poly(alcool vinylique) selon la revendication 1 à 9, **caractérisé en ce que** le temps de séjour du mélange réactionnel dans l'extrudeuse est de 0,2 à 5 minutes.
